Europäisches Patentamt

European Patent Office

Office européen des brevets

(19)

(11) Veröffentlichungsnummer: **0 018 428**
**B1**

(12)

# EUROPÄISCHE PATENTSCHRIFT

(45) Veröffentlichungstag der Patentschrift:
07.03.84

(21) Anmeldenummer: 79101389.9

(22) Anmeldetag: 07.05.79

(51) Int. Cl.³: **G 01 L 5/10,** G 01 B 7/24,
G 01 R 33/18, G 01 N 27/83,
B 21 C 51/00

(54) Vorrichtung zur kontaktlosen Messung des elastischen Spannungszustandes in ferromagnetischen Körpern.

(43) Veröffentlichungstag der Anmeldung:
12.11.80 Patentblatt 80/23

(45) Bekanntmachung des Hinweises auf die Patenterteilung:
07.03.84 Patentblatt 84/10

(84) Benannte Vertragsstaaten:
BE DE FR GB LU NL SE

(56) Entgegenhaltungen:
DE - A - 2 060 725
DE - A - 2 406 474
DE - B - 1 201 582
FR - A - 2 378 270
GB - A - 1 160 124

(73) Patentinhaber: **A Magyar Tudományos Akadémia Müszaki Fizikai Kutato Intézete, Foti ut 56., Budapest IV. (HU)**
Patentinhaber: **Dunai Vasmü, Dunaujváros (HU)**

(72) Erfinder: **Gaal, István, Dr., Sasadi u. 43., Budapest XI. (HU)**
Erfinder: **Ivanov, Péter, Szentendrei ut 34., Budapest III (HU)**
Erfinder: **Major, János, Dr., Vajdahunyad u. 39., Budapest I. (HU)**
Erfinder: **Hauszner, Erno, Dr., Dunasor u. 7., Dunaujváros (HU)**
Erfinder: **Zsambok, Dénes, Kisdobos u. 3., Dunaujváros (HU)**

(74) Vertreter: **Viering, Hans-Martin, Dipl.-Ing. et al, Patentanwälte Viering & Jentschura Steinsdorfstrasse 6, D-8000 München 22 (DE)**

## Vorrichtung zur kontaktlosen Messung des elastischen Spannungszustandes in ferromagnetischen Körpern

Die Erfindung betrifft eine Vorrichtung zum kontaktlosen Messen der elastischen Spannungen in ferromagnetischen Körpern – besonders in Blechen.

Die Erfindung beruht auf dem an sich bekannten Prinzip, dass die magnetischen Eigenschaften der ferromagnetischen Materialien durch elastische Spannungen geändert werden (Magnetoelastizität), und zwar auf die Weise, dass die elastische Spannung eine magnetische Anisotropie hervorruft, bzw. die vorhandene magnetische Anisotropie modifiziert. Wird also ein Magnetfelderreger durch den ferromagnetischen Prüfling mit einem Magnetfelddetektor gekoppelt, so wird das Detektorsignal durch die elastischen Spannungen des Prüflings beeinflusst. Dadurch entsteht ein Messprinzip zur magnetischen Messung der elastischen Spannungen in ferromagnetischen Körpern. Eine Verwirklichung dieses Prinzips ist z.B. in der GB-A-1 160 124 oder der DE-B-1 201 582 beschrieben. Bei letzterer Vorrichtung wird zur Bestimmung eines Wechsels der Richtung der mechanischen Beanspruchung im Prüfling vorgeschlagen, die Messspannung in einer phasenempfindlichen Gleichrichteranordnung mit der Erregerspannung zu vergleichen, so dass am Messgerät sowohl die Grösse als auch die Richtung der Beanspruchung abgelesen werden kann.

Die auf diesem Prinzip beruhenden magnetischen Vorrichtungen zur Messung der elastischen Spannungen haben folgende Nachteile:

a) Selbst bei Bändern aus dem gleichen Material (z.B. aus einem einzigen Ingot) muss man für jede Bandstärke das elektrische Signal der Messvorrichtung gesondert auf die elastische Spannung kalibrieren und eine geeignete Erregerstromstärke wählen. Ohne Kalibration und Einstellung eines geeigneten Erregerstromes ist es möglich, dass die bekannten Messvorrichtungen bei Blechen nicht nur die Grösse, sondern auch das Vorzeichen der Spannung falsch anzeigen, wenn während des Walzens der magnetische Arbeitspunkt des Messkopfes durch die Änderung der magnetischen Eigenanisotropie wesentlich verschoben wird.

b) Da die Vorrichtung die gemeinsame Wirkung der schon vorhandenen magnetischen Eigenanisotropie und der zu messenden elastischen Spannung fühlt, kann sie nur auf so grosse äussere elastische Spannungen geeicht werden, die eine magnetische Anisotropie hervorrufen, neben der die ursprüngliche magnetische Eigenanisotropie des Prüflings vernachlässigt werden kann. Gemäss der DE-B-1 201 582 wird zur Kompensation der durch die magnetische Eigenanisotropie bewirkten Nullpunktverschiebung des Messwertes eine einstellbare Zusatzspannung im Messkreis verwendet. Gemäss der DE-A-2 060 725 hingegen wird unter der Voraussetzung, dass ein kaltgewalztes Band in Querrichtung eine höhere magnetische Permeabilität als in der Walzrichtung zeigt, eine Vormagnetisierungswicklung derart um den einen Primärelektromagneten und den einen Sekundärelektromagneten angeordnet, dass ihr Stromfluss quer zur Walzrichtung des Bandes verläuft und in der Walzrichtung zusätzliche Magnetflusskomponenten erzeugt werden, durch welche der in Walzrichtung durch die Primärelektromagneten erzeugte Magnetfluss ohne Beeinflussung der Magnetflussdichte in der Querrichtung ergänzt und dadurch die Eigenanisotropie des Bandes kompensiert wird. Jedoch stimmt die Richtung der Achse der magnetischen Eigenanisotropie nicht immer mit der Walzrichtung überein.

c) Bei den bekannten Vorrichtungen ist die rein sinusförmige zeitliche Änderung der Induktion nicht gesichert, und so enthält das Fourierspektrum des Messignales mehrere Fourierkomponenten, was die Messgenauigkeit wesentlich vermindert.

d) Die Massnahmen, die man bisher zur Erreichung der Unabhängigkeit der elektrischen Ausgangsspannung vom Luftspalt getroffen hat, gewährleisten nicht, dass die Stabilität des magnetischen Arbeitspunktes gesichert ist. Deshalb ist das Messen von schwingenden oder nicht vollkommen planen Bändern nur mit stark eingeschränkter Genauigkeit möglich, und es kann nicht ausgeschlossen werden, dass die Messung im Extremfall falsche Informationen ergibt. Auf bekannte Massnahmen zur Kompensation von Luftspaltänderungen wird weiter hinten bei der Erläuterung des Ausführungbeispiels hingewiesen.

Die in Punkt a) erwähnte Schwierigkeit erfordert besonders bei reversierenden Walzwerken eine erhebliche Kalibrationsarbeit. Jeder der Mängel, die in Punkt b) – d) aufgezählt wurden, kann die Messung nicht nur beim reversierenden, sondern auch beim Einbahnwalzen, ja sogar auch beim Dressieren, verfälschen.

Es wurde erkannt, dass der Nachteil a) vermieden werden kann, wenn man die Messvorrichtung mit einer solchen Frequenz arbeiten lässt, bei der die Skintiefe kleiner ist als die Dicke des Prüflings. Die Skintiefe wird bekanntlich von der Frequenz des Erregerfeldes, der magnetischen Permeabilität und der spezifischen elektrischen Leitfähigkeit des Prüflings bestimmt.

Es hat auch weitere Vorteile, wenn die Frequenz des magnetischen Feldes in einem breiten Intervall veränderlich ist. Mit Änderung der Frequenz kann die Skintiefe verändert werden, und so kann die durchschnittliche mechanische Spannung unter der Oberfläche bis zu verschiedenen Tiefen gemessen werden. Lässt man mit einer an sich bekannten Messautomatik ein geeignetes Frequenzprogramm einstellen, so kann man z.B. während des Dressierwalzens die Verteilung der elastischen Spannung über die Dicke des Bandes auch kontinuierlich messen, wodurch der Walzstich auf die optimale Spannungsverteilung eingestellt, bzw. die Homogenität dieser Verteilung mit Hilfe einer geeigneten Vorrichtung auch kontinuierlich kontrolliert werden kann.

Weiter wurde erkannt, dass der Nachteil b) vermieden werden kann, wenn die Wirkung der in dem Prüfling schon vorhandenen magnetischen Eigenanisotropie durch ein geeignetes statisches magnetisches Kompensatorpaar aufgehoben wird. Auf diese Weise können unabhängig von der Grösse der in dem Material schon vorhandenen magnetischen Eigenanisotropie auch beliebig kleine äussere mechanische Spannungen mit ausreichender Genauigkeit gemessen werden.

Ausserdem wurde erkannt, dass der Nachteil c) durch eine an sich bekannte, aber bei der magnetischen Messung der elastischen Spannungen noch nie benutzte negative magnetische Spannungsrückkopplung in dem magnetischen Erregerkreis vermieden werden kann. Der Erregerstrom enthält dann in dem Masse und auf die Weise Oberwellen, dass der Induktionsfluss eine reine Sinusform als Funktion der Zeit annimmt, und damit erreicht man, dass er keine störenden Wirbelströme erregt. Damit werden gleichzeitig auch die Wirbelstromverluste auf ein Minimum abgesenkt.

Ausserdem wurde erkannt, dass durch die negative magnetische Spannungsrückkopplung in dem magnetischen Erregerkreis auch der Nachteil d) vermieden werden kann. Dadurch ist nämlich automatisch gesichert, dass eine Änderung des Luftspaltes den ursprünglich eingestellten magnetischen Arbeitspunkt des Prüflings nicht verschiebt. Ergänzt man diese erfindungsgemässe Massnahme mit einer der in den bisher bekannten Vorrichtungen schon gelegentlich benutzten Anordnungen, die den Detektor vom Luftspalt unabhängig machen, so wird die Spannungsmessung von den Änderungen des Luftspaltes unabhängig.

Weiter wurde erkannt, dass man bei Rückkopplung auf einen ständigen Arbeitspunkt und bei geeigneter Wahl und Änderung der Skintiefe eine Vorrichtung entwickeln kann, die eine kontinuierliche Prüfung der ferromagnetischen Bänder schon am Walzgerüst ermöglichen. Die Prüfung besteht dabei darin, dass die räumlichen Änderungen der Parameter der magnetischen Anisotropie in geeigneten Richtungen bzw. in allen drei Dimensionen bestimmt werden.

Weiterhin wurde erkannt, dass eine kontaktlose magnetische Spannungsmessvorrichtung in einem Industrielaboratorium dazu geeignet ist, die magnetische Anisotropie grosser ferromagnetischer Materialien nach Richtung und Grösse hin aufzuzeichnen, ganz unabhängig davon, ob die magnetische Anisotropie z.B. durch die kristallographischeTextur, die inneren Spannungen, die magnetische Wärmebehandlung oder durch Fremdstoffe hervorgerufen wird. Aus der magnetischen Anisotropie kann man auf die physikalischen und technologischen Eigenschaften des Prüflings (z.B. auf die Richtungen der Hauptachsen der inneren Spannungen, die Unterschiede der Hauptspannungen, die Textur, die Inhomogenität der Härte, die Planheitsfehler usw.) schliessen. In vielen praktischen Fällen verlaufen wenigstens in den Tiefen, die mit den üblichen magnetischen Messungen noch erfasst werden können, zwei Hauptspannungen parallel zur Oberfläche des Prüflings. In allen der später beschriebenen Verfahren ist vorausgesetzt, dass sich der Prüfling in einem derartigen Spannungszustand befindet.

Ziel der Erfindung ist es, eine zur kontaktlosen Messung des Spannungszustandes dienende Vorrichtung zu schaffen, die besonders hinsichtlich der Kompensation der magnetischen Eigenanisotropie verbessert ist.

Dieses Ziel wird erfindungsgemäss mit dem Gegenstand des Anspruchs 1 erreicht.

Die Erfindung wird nachfolgend anhand von Abbildungen, die zweckmässige Ausführungsformen bzw. Anwendungsmöglichkeiten darstellen, näher erläutert.

Fig. 1 zeigt den schematischen Aufbau einer an sich bekannten Einrichtung zur magnetischen Messung elastischer Spannungen.

Fig. 2 zeigt die Ausgangsspannung der Einrichtung in Abhängigkeit von der Winkellage des aus dem Erreger und dem Detektor bestehenden Messkopfes.

Fig. 3 zeigt das Schema der Vorrichtung, die den Messkopf auf die beschriebene Art verschiebt und dreht.

fig. 4 zeigt die Verteilung der inneren Spannung über die Banddicke hin bei einem typischen dressierten Stahlband in Abhängigkeit von der Tiefe unter der Oberfläche.

Fig. 5a und 5b zeigen die Anordnung der Magnetkerne der Vorrichtung gemäss der Erfindung in axionometrischer und in vom Prüfling her gesehener Darstellung.

Fig. 6 zeigt die elektrische Schaltung der mit Gleichstrom gespeisten magnetischen Kompensatoren.

Fig. 7 zeigt die Anordnung der negativen magnetischen Spannungsrückkopplung.

Fig. 8 zeigt die Anordnung der an eine Kaltwalzanlage montierten erfindungsgemässen Messköpfe, die als Fühler einer Kontrollvorrichtung bzw. für ein Regelungssystem dienen.

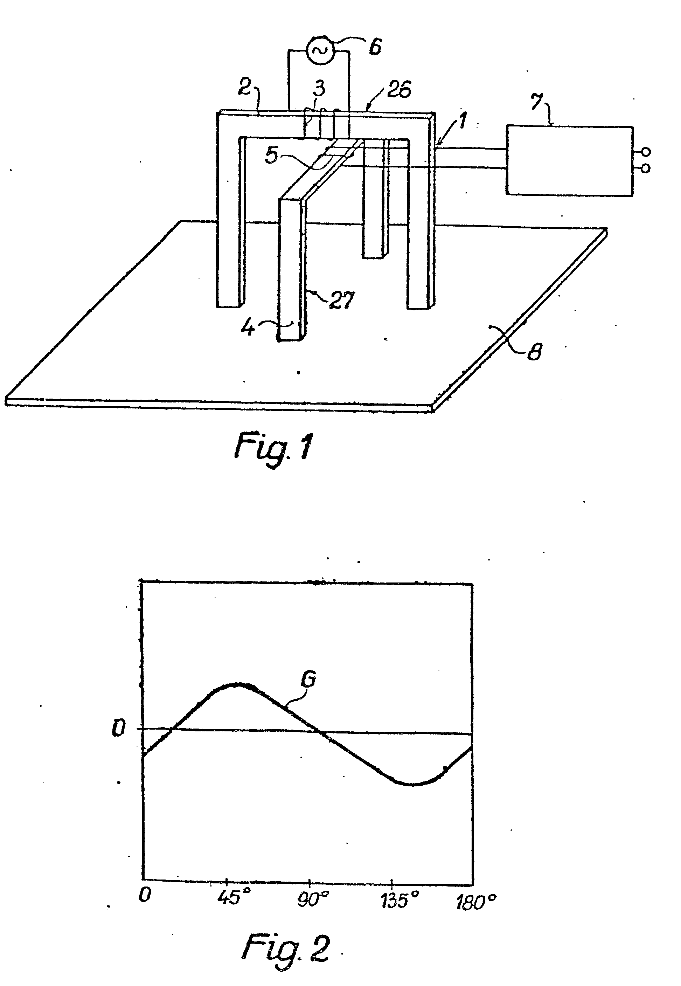

Fig. 1 zeigt den Aufbau eines an sich bekannten Messkopfes zur magnetischen Messung der elastischen Spannungen. Der Messkopf 1 besteht aus dem Erreger 26 und aus dem Detektor 27. Der Erreger 26 setzt sich aus dem ferromagnetischen U-Kern 2 und der darauf angebrachten Spule 3 zusammen. Der Detektor 27 setzt sich aus dem ferromagnetischen U-Kern 4 und aus der darauf angebrachten Spule 5 zusammen. Der U-Kern 4 steht fast senkrecht zu dem U-Kern 2 und die Kerne sind so justiert, dass der Detektor 27 mit dem Erreger 27 in minimaler magnetischer Kopplung steht. Die Spule 3 wird vom Generator 6 gespeist. Das Ausgangssignal der Spule 5 wird auf den phasenempfindlichen Verstärker 7 geleitet. In der Zeichnung befindet sich der Messkopf 1 über dem Prüfling 8.

Durch den Wechselstrom in Spule 3 wird der Prüfling 8 periodisch magnetisiert. Ist das Material des Prüflings 8 magnetisch isotrop, so verlaufen die magnetischen Kraftlinien symmetrisch um die Ebene des Erregers 26 und dringen nicht in den Kern 4 des Detektors 27 ein. Ist das Material des Prüflings 8 hingegen magnetisch anisotrop, so wird die Symmetrie der magnetischen Kraftlinien der Anisotropie entsprechend verzerrt, ein Teil der Kraftlinien schliessen sich durch den Kern 4 des Detektors 27, und somit wird in der Detektorspule 5 Wechselspannung induziert. Die Amplitude der induzierten Wechselspannung hängt von der Anisotropie des untersuchten Materials ab. Ihr Phasenwinkel beträgt im Verhältnis zum anregenden magnetischen Strom annähernd $+90°$ oder $-90°$ in Abhängigkeit davon, in welches Raumviertel die Magnetisierung des Prüflings weist.

Der an sich bekannte Messkopf 1 kann zur Bestimmung der räumlichen Verteilung der Parameter der magnetischen Anisotropie auf die folgende Weise angewandt werden. Dreht man den Messkopf 1 um eine auf die Oberfläche des Prüflings senkrecht stehende Achse, und fühlt man die Ausgangssignale mit dem phasenempfindlichen Verstärker 7 ab, so erhält man, wenn man die Ausgangssignale in Abhängigkeit der Winkellage des Messkopfes darstellt, ein Diagramm, wie es in Fig. 2 zu sehen ist. Das Maximum der Kurve G ist proportional zu der Differenz der beiden Hauptspannungen, die gemäss Voraussetzung parallel zu der Oberfläche des Prüflings 8 liegen. Die Nullstellen der Kurve G geben die Richtungen der genannten Hauptspannungen an. Die Phasenverhältnisse der im Detektor 27 induzierten Spannung bestimmen eindeutig, welche Nullstelle der Richtung der grösseren der beiden Hauptspannungen entspricht.

An einem Prüfling, dessen ursprüngliche magnetische Anisotropie im Verhältnis zur Wirkung der äusseren Belastung vernachlässigt werden kann, können unter bekannten Zugbelastungen sowohl die Phasenverhältnisse, die die Richtung der grösseren der beiden genannten Hauptspannungen festsetzen, als auch die mechanische Spannungsempfindlichkeit der Messvorrichtung bestimmt werden. Zu dieser Eichung muss man die Winkelabhängigkeit des Ausgangssignales (vgl. Fig. 2) aufnehmen. Zu diesem Zweck dreht man den Messkopf 1 um eine zur Oberfläche des Prüflings senkrecht stehende Achse, während der Prüfling in einer geeichten Zugprüfmaschine belastet ist. Die Spannungsempfindlichkeit erhält man aus dem Maximum der Winkelabhängigkeitskurve. In derjenigen Nullstelle der Kurve, die die Richtung der grösseren der beiden genannten Hauptspannungen festsetzt, ist das Vorzeichen der ersten Ableitung der Kurve unabhängig von den Eigenschaften des Prüflings. Dieses Vorzeichen kann man während der oben beschriebenen Eichung ermitteln, denn hier ist die Richtung der grösseren der beiden Hauptspannungen gerade die Richtung der bekannten äusseren Belastung. Solange die Phasenverhältnisse Eigenschaften der Messvorrichtung sind, und mit einer einzigen Eichung für immer bestimmt werden können, hängt die Spannungsempfindlichkeit der Messvorrichtung wesentlich von den Eigenschaften des Prüflings ab, so dass dann die Eichung der Spannungsempfindlichkeit bei jedem Prüfling gesondert durchgeführt werden muss.

Mit Hilfe einer magnetischen Spannungsmessvorrichtung, die auf ein gegebenes ferromagnetisches Werkstück kalibriert ist, kann man unter den Bedingungen eines Industrielaboratoriums die oben genannten beiden wichtigsten Parameter des inneren Spannungszustandes von ansonsten homogenen unbelasteten ferromagnetischen Werkstücken ermitteln.

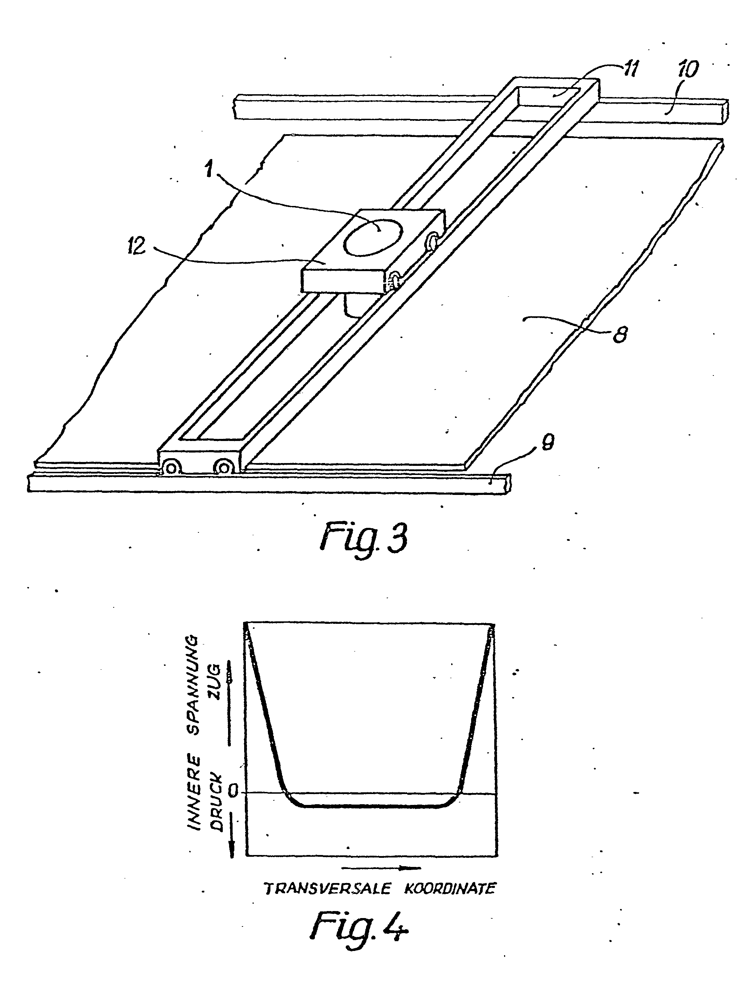

Eine Möglichkeit zur zerstörungsfreien betriebslaboratorischen Prüfung bzw. Sortierung der ferromagnetischen Bänder besteht also darin, dass man den magnetischen Messkopf 1 so auf ein verschiebbares und drehbares Gestell montiert, dass er über jedem beliebigen Punkt des Bandes in jeder beliebigen Winkelstellung eingestellt werden kann. Eine mögliche Ausführung dieser Hilfsvorrichtung veranschaulicht Fig. 3. Der ferromagnetische Prüfling 8 (in der Figur ein Blech) wird auf einen Tisch mit den am Rand befestigten Schienen 9 und 10 gebracht. Auf den Schienen 9 und 10 kann der Wagen 11 in deren Längsrichtung verschoben werden. Auf dem Wagen 11 befindet sich der Wagen 12, der in der Querrichtung verschoben werden kann. Auf dem Wagen 12 ist der magnetische Messkopf 1 drehbar angebracht.

Die Verschiebung der Wagen 11 und 12, sowie die Drehung des Messkopfes 1 werden von einem Motor mit entsprechenden Übersetzungen und Verbindungsstücken (z.B. Riemen, Rollen) durchgeführt. (Die Motoren sind z.B. Servomotoren.) Die Positionsgeber der Längs- und Querrichtung stehen in direkter Kopplung mit den Wagen 11 und 12, der Geber der Winkelposition ist mit dem drehbaren Messkopf 1 verbunden. (Als Positionsgeber können z.B. helikale Potentiometer dienen.)

Mit Hilfe der Vorrichtung, die in Fig. 3 dargestellt ist, können die vorher beschriebenen beiden Parameter des inneren Spannungszustandes in jedem beliebigen Punkt des ferromagnetischen Blechprüflings ermittelt werden. Dadurch ist ein zerstörungsfreies Prüfverfahren geschaffen, welches sich auf eine an sich bekannte Weise automatisieren lässt und Informationen gibt, die zur Charakterisierung und Sortierung der Bleche geeignet sein können.

Über die Homogenität der oben genannten beiden Paramter des Spannungszustandes von ansonsten (d.h. chemisch und strukturell) homogenen ferromagnetischen Blechen kann man sich auch in einem kontinuierlichen Schnellverfahren einen Überblick verschaffen, falls der Messkopf vorher auf das zu untersuchende Blech geeicht wurde.

Bei diesem Schnellverfahren stellt man den Messkopf 1 auf die Hilfsvorrichtung, die aus Fig. 3 ersichtlich ist. Zuerst werden der Messkopf über einen beliebig gewählten Eichpunkt des Bleches gestellt und das Ausgangssignal in Abhängigkeit von der Winkelposition des Messkopfes aufgenommen (vgl. Fig. 2). Danach wird der Messkopf in der Winkellage I fixiert, die im Eichpunkt zu der Richtung der grösseren der beiden parallel zu der Oberfläche verlaufenden Hauptspannungen gehört. Die Inhomogenitätskurve I erhält man dadurch, dass man mit dem Messkopf in der Winkellage I das Blech abtastet. Fixiert man den Messkopf beim Abtasten in einer Winkellage II, in welcher der Messkopf im Eichpunkt ein maximales Ausgangssignal erbringt, so erhält man die Inhomogenitätskurve II.

Die Inhomogenitätskurve I gibt die Änderung der Richtung der grösseren der beiden parallel zu der Oberfläche verlaufenden Hauptspannungen an; die Inhomogenitätskurve II stellt die Änderung des Unterschiedes der beiden Hauptspannungen dar. Schwankt die erste Kurve um Null und ist die Änderung der zweiten klein gegenüber der Amplitude der Eichkurve, die die Winkelabhängigkeit des Ausgangssignales in dem Eichpunkt darstellt, so herrscht in dem Blech ein im wesentlichen homogener Spannungszustand. Zeigen dagegen die beiden registrierten Kurven eine Änderung, die in ihrer Grösse mit der Amplitude der Eichkurve vergleichbar ist, so ist das Blech mechanisch und/oder magnetisch stark inhomogen, und das Schnellverfahren ist für eine weitere Prüfung ungeeignet. In diesem Fall müsste man den sonst homogenen Prüfling von Punkt zu Punkt auf die oben beschriebene Weise untersuchen, falls dies vom Gesichtspunkt der Materialprüfung notwendig ist.

Die bisher beschriebenen Prüfverfahren können wesentlich erweitert werden, wenn man die Frequenz des Wechselstromgenerators 6 variieren kann. Bei jeder Frequenz erhält man nämlich nur bis zu einer gewissen magnetischen Skintiefe Informationen über den mechanischen Spannungszustand des Prüflings. Mit der Änderung der Frequenz des magnetischen Feldes kann man also auch die Änderungen des Spannungszustandes in der Richtung senkrecht zur Oberfläche erfassen. Es ist zweckmässig, die Kreisfrequenz der Messung in dem folgenden Intervall zu variieren.

$$\frac{4 \cdot 10^{-2} \cdot v^2 \cdot \mu}{\delta} \leqslant \omega \leqslant \frac{4 \cdot v^2 \cdot \mu}{\delta}$$

wobei v die erzielte Tiefe der Prüfung, μ die magnetische Permeabilität des Körpers entlang der Achse der schweren Magnetisierung und ξ der spezifische elektrische Widerstand des Prüflings sind.

Bei der Sortierung der dressierten Bänder ist es besonders wichtig, die Verteilung der inneren mechanischen Spannungen auch über die Banddicke zu kennen. Aus Fig. 4 ist die Tiefenabhängigkeit der inneren Spannung in einem typischen dressierten Band ersichtlich. Die transversale Koordinate gibt die Entfernung von der Oberfläche des Bandes an, die senkrechte Koordinate stellt die in der Walzrichtung liegende Komponente der inneren Spannung dar. Benutzt man magnetische Wechselfelder von verschiedener Skintiefe, so misst man Durchschnittswerte der Spannung für verschiedene Tiefen und aus der Tiefenabhängigkeit der Durchschnittswerte kann die wirkliche Ortsabhängigkeit der beiden parallel zu der Oberfläche verlaufenden Hauptspannungen ermittelt werden.

Mit dieser Methode ist man zu einer Prüfmethode gelangt, mit der man den Dressierprozess zerstörungsfrei verfolgen kann. (Aus den Messresultaten kann man sogar auch auf die Neigung zur Alterung schliessen).

Eine wesentliche Voraussetzung zur Brauchbarkeit der oben beschriebenen Verfahren ist es, dass der Luftspalt, d.h. der Abstand der Oberfläche des Prüflings 8 von den Stirnflächen der Magnetkerne des Messkopfes 1, während der Eichung und der Messung gleich gross sind. Sofern die in Fig. 1 dargestellte Vorrichtung zur magnetischen Messung der mechanischen Spannungen mit einem Stromkreis, der die später beschriebene negative magnetische Spannungsrückkopplung verwirklicht, und irgendeiner der Vorrichtungen ergänzt wird, die die Unabhängigkeit des Detektors 27 von dem Luftspalt sichern, ergibt sich die Möglichkeit, auch Körper mit nicht vollkommen planer Oberfläche, wellige und vibrierende Bänder zu messen bzw. zu prüfen.

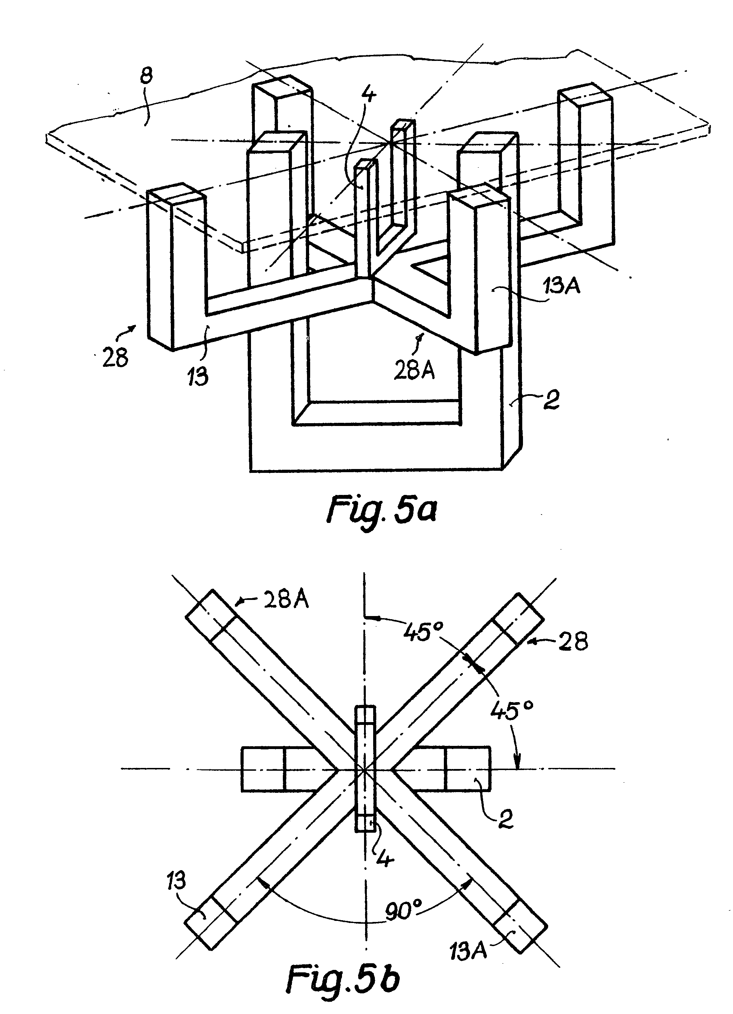

Fig. 5 zeigt die Magnetkerne des magnetischen Messkopfes, die gemäss der Erfindung durch die statischen magnetischen Kompensatoren 28 und 28A ergänzt sind. Fig. 5a ist ein axionometrisches Bild der Magnetkerne des Messkopfes. Fig. 5b zeigt die Magnetkerne in der Sicht vom Prüfling 8 her. Der Erregerkern 2 und der Detektorkern 4 befinden sich in fast senkrecht aufeinander stehenden Ebenen, während die Ebenen der Magnetkerne 13 und 13A der statischen magnetischen Kompensatoren 28 und 28A annähernd die Winkelhalbierenden der Ebenen der Kerne 2 und 4 sind. Der Querschnitt der Magnetkerne, die das nötige magnetische Gleichfeld bzw. Wechselfeld erzeugen, wird von dem notwendigen maximalen Magnetfluss bestimmt, der seinerseits vom zu untersuchenden Material abhängt. Die Kerne können nicht nur mit quadratischem Querschnitt, wie es aus der Zeichnung ersichtlich ist, hergestellt werden, sondern z.B. auch mit kreisförmigem Querschnitt. Das Material des Erregerkernes 2 und des Detektorkernes 4 soll über eine grosse Anfangspermeabilität, grossen spezifischen elektrischen Widerstand verfügen und ferromagnetisch linear sein; es ist zweckmässigerweise ein Mangan-Zink-Ferrit. Die Kerne 13 und 13A der statischen magnetischen Kompensatoren 28 und 28A werden aus einem Material hergestellt, das einen gossen spezifischen elektrischen Widerstand und hohe Sättigungsmagnetisierung hat und dessen Achse der schweren Magnetisierung mit der Längsachse der Kerne übereinstimmt. Es ist zweckmässigerweise eine Permalloy-Legierung.

Die genaue Lage des Erregerkernes 2 und des Detektorkernes 4 wird so eingestellt, dass ohne den ferromagnetischen Prüfling 8 – also bei offenen Magnetkreisen – die magnetische Kopplung zwischen ihnen minimal wird.

Aus Fig. 5b ist die Spannweite der U-Kerne zu sehen. Der Detektorenkern 4 kann z.B. die kleinste Spannweite haben, damit die Änderung der magnetischen Anisotropie in einem möglichst homogenen Feld erfasst wird. Die Spannweite der Kompensatorkerne 13 und 13A ist grösser als die des Erregerkernes 2. Der Grund dafür liegt darin, dass der magnetische Widerstand der mit Gleichstrom gespeisten Kompensatoren 28 und 28A durch den Prüfling 8 möglichst klein und durch den Erregerkern 2 möglichst gross sein soll. Bei einem nicht allzu grossen Luftspalt kann man mit den Verhältnissen, die aus der Figur ersichtlich sind, vermeiden, dass ein bedeutender Teil des Kompensationsflusses durch den Erregerkern 2 und durch den Detektorkern 4 bzw. ein bedeutender Teil des Erregerflusses durch die Kompensatorkerne 13 und 13A geschlossen wird. (Diese magnetischen «Kurzschlüsse» würden nämlich die Messungen verfälschen).

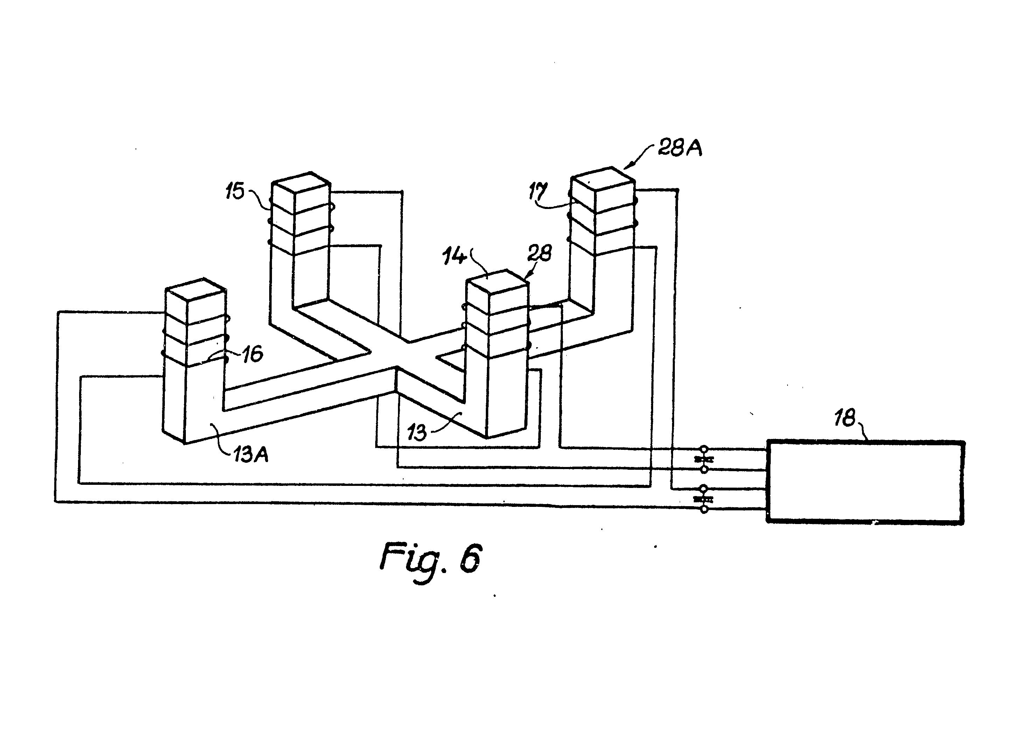

Aus Fig. 6 ist die elektrische Schaltung der statischen magnetischen Kompensatoren 28 und 28A ersichtlich. Auf den einander gegenüberliegenden Schenkeln der Kerne 13 (bzw. 13A) werden die Spulen 14 und 15 (bzw. 16 und 17) so in Reihe geschaltet, dass sich ihre Erregungen summieren. Die in Reihe geschalteten Spulen 14 und 15 bzw. 16 und 17 werden durch die regulierte doppelte Gleichstromquelle 18 gespeist. Das Verhältnis der beiden Stromstärken wird durch die Richtung der im Prüfling herrschenden magnetischen Anisotropie, die zu kompensieren ist, bestimmt. Die Grösse der Stromstärken soll entsprechend der magnetischen Permeabilität des Prüflings und des Luftspaltes gewählt werden. Um eine minimale magnetische Kopplung bei möglichst kleinen Spannweiten der Kerne 13 und 13A zu gewährleisten, ist es zweckmässig, die Spulen 15, 16 und 17, 18 mit Kondensatoren parallel zu schalten, wie es aus Fig. 6 ebenfalls ersichtlich ist.

Die grundlegende Voraussetzung für ein fehlerfreies Messen mit dem magnetischen Messkopf, der durch die statischen magnetischen Kompensatoren 28 und 28A ergänzt ist, besteht darin, dass die magnetische Induktion, die durch den Erreger 26 in dem Prüfling 8 zustande gebracht wird, d.h. der magnetische Arbeitspunkt, während der Eichung und der Messung auch in dem Fall konstant bleibt, wenn man nicht für eine konstante Grösse des Luftspaltes sorgen kann.

Die Messgenauigkeit der magnetischen Messköpfe wird auch durch einen anderen Umstand herabgesetzt. Da die ferromagnetischen Materialien oft ein nicht-lineares Verhalten zeigen, enthält der von dem Erreger 26 hervorgerufene magnetische Induktionsfluss viele Oberwellen, obwohl er durch eine sinusförmige elektrische Wechselspannung gespeist wird. Der Wirbelstromverlust, der im Prüfling durch die Oberwellen induziert wird, beschränkt die Messgenauigkeit wesentlich.

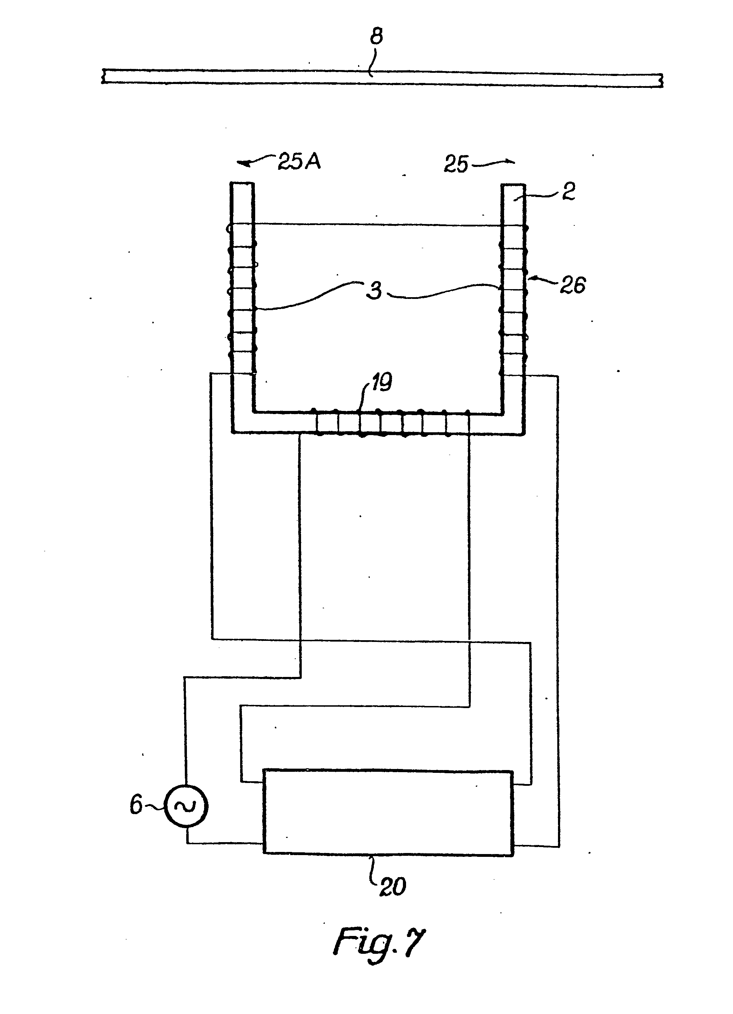

Die Unabhängigkeit des magnetischen Arbeitspunktes vom Luftspalt und der minimale Gehalt des magnetischen Erregerflusses an Oberwellen wird durch eine – an sich bekannte – negative magnetische Spannungsrückkopplung gewährleistet. Der Stromkreis, der die negative magnetische Spannungsrückkopplung verwirklicht, ist aus Fig. 7 ersichtlich. Den magnetischen Erregerkreis bilden der Prüfling 8, der magnetische Erregerkern 2 und die Luftspalte 25 und 25A. Die rein sinusförmige Wechselspannung des Generators 6 wird auf den Eingang des Leistungsverstärkers 20 und auf die mit ihm parallel geschaltete Rückkopplungsspule 19 geschaltet, die sich auf dem Erregerkern 2 befindet. Die negative Rückkopplung erreicht man durch die phasenrichtige Schaltung der Rückkopplungsspule 19. Ist der Spannungsverstärkungsgrad des Leistungsverstärkers 20 gross genug (wenigstens 100fach), so fliesst in der Erregerspule 3, die sich auf dem Erregerkern 2 befindet und aus zwei in Reihe geschalteten Teilen besteht, ein – nicht unbedingt reiner sinusförmiger – Wechselstrom, durch dessen Wirkung der magnetische Induktionsfluss im magnetischen Erregerkreis, und so auch im Prüfling 8 in der Funktion der Zeit eine reine Sinuskurve zeigt. Wegen der negativen Rückkopplung bleibt der magnetische Induktionsfluss auch dann in seiner Zeitabhängigkeit rein sinusförmig mit unveränderter Amplitude, wenn sich der magnetische Widerstand des magnetischen Erregerkreises z.B. durch die Änderung des Luftspaltes ändert.

So ist mit Hilfe der negativen magnetischen Spannungsrückkopplung die Unabhängigkeit des magnetischen Arbeitspunktes vom Luftspalt, sowie der minimale Gehalt an Oberwellen der magnetischen Induktion im Prüfling gewährleistet. Natürlich kann die Grösse des Luftspaltes nicht unbegrenzt verändert werden, da der magnetische Widerstand des magnetischen Erregerkreises nicht in mehreren Grössenordnungen geändert werden kann.

Die Amplitude des sinusförmigen Magnetflusses kann man durch die geeignete Wahl der Spannungsamplitude des Generators 6 auf den gewünschten Wert einstellen. Um eine ausreichende Genauigkeit des magnetischen Messkopfes zu erreichen, ist es notwendig, dass der Gehalt an Oberwellen im Ausgangssignal des Detektors 27 kleiner als 5% ist.

Die Unabhängigkeit vom Luftspalt ist nicht nur beim magnetischen Wechselinduktionsfluss notwendig, sondern auch bei den statischen Magnetkreisen der Kompensatoren. Hier gibt es – da es sich um ein statisches Feld handelt – keine Möglichkeit zur direkten Rückkopplung. Benutzt man den aus Fig. 7 ersichtlichen negativen magnetischen Spannungsrückkopplungskreis, so kann ein elektrisches Signal, das auf die Grösse des Luftspaltes hinweist, direkt von den Polen der Spule 3 abgenommen werden. Mit dieser Wechselspannung kann auf an sich bekannte Weise die aus Fig. 6 ersichtliche doppelte Gleichstromquelle 18 so geregelt werden, dass das Verhältnis der beiden Stromstärken auch bei Änderung des Luftspaltes unverändert bleibt.

Wird die Luftspaltunabhängigkeit auch im Detektor 27 des magnetischen Messkopfes gewährleistet, der in seinem Erregerkreis mit einer negativen magnetischen Spannungsrückkopplung versehen wurde, so kann der Messkopf auch in den Fällen angewandt werden, in denen man die Konstanz des Luftspaltes nicht sichern kann. So kann man z.B. auch vibrierende, wellige Bänder messen.

Die Luftspaltunabhängigkeit des Detektors 27 des magnetischen Messkopfes kann mit verschiedenen, bekannten Alternativlösungen gewährleistet werden:

a) Die Detektorspule 5 wird mit einem entsprechend dimensionierten Kondensator parallel geschaltet (Ju.D. Shélesnow, A.G. Shurawskij, A.I. Kondratow: Pribory is sistemy upravlenjija, No 3, S. 25–26, 1972). Diese Alternativlösung kann in Messvorrichtungen mit veränderlichen Frequenzen nicht benutzt werden.

b) Die luftspaltabhängige Wechselspannung der Erregerspule 3 kann zur Regelung des Verstärkungsfaktors des phasenempfindlichen Verstärkers 7 so benutzt werden, dass das Ausgangssignal unabhängig vom Luftspalt wird (J.R. Dahm: Instrumentation Technology, May, S. 54–59, 1970, DE-A-2 060 725).

c) Das luftspaltunabhängige Signal wird aus der Spannung der Erregerspule 3 und aus dem Ausgangssignal des Detektors 27 auf an sich bekanntem digitalen Weg hergestellt.

Es ist zweckmässig, die obigen Massnahmen zur Stabilisierung des magnetischen Arbeitspunktes und zur Erreichung der Luftspaltunabhängigkeit des Detektors 27 auch bei den oben beschriebenen betriebslaboratorischen Messeinrichtungen anzuwenden, die nicht mit den statischen magnetischen Kompensatoren 28 und 28A versehen sind. Die so ergänzte Vorrichtung kann z.B. auch zur Sortierung von welligen Blechen oder von Prüflingen mit nicht ganz planer Oberfläche angewandt werden.

Bei Gebrauch des magnetischen Messkopfes ist es wesentlich, dass in ihm keine bedeutenden Verluste durch das magnetische Wechselfeld auftreten dürfen. Mit der Eliminierung solcher Leistungsverluste steigt die Messgenauigkeit, und die kleinste Änderung der mechanischen Spannung, die noch aufgelöst werden kann, wird kleiner. Weiterhin ist wesentlich, dass die Leistungsaufnahme der Erreger herabgesetzt wird und so die elektrische Eingangsspannung unter 15 V gesenkt werden kann, was aus Sicherheitsgründen vorteilhaft ist. Die Verluste kann man mit zwei Massnahmen mindern: die Kerne des magnetischen Messkopfes sollen aus einem ferromagnetischen Material mit minimaler spezifischer elektrischer Leitfähigkeit hergestellt werden (zweckmässigerweise benutzt man Magnetkerne aus Sintermaterial oder aus Blechen); die mechanischen Elemente, die die Justierung des Messkopfes ermöglichen, sollen aus Isolatoren hergestellt werden; zur Minderung der Wirbelströme, die im Wicklungsdraht in azimutaler Richtung auftreten, soll der Wicklungsdraht einen kleinen Querschnitt haben, oder eine Litze sein und/oder aus einem Material mit hohem elektrischen Widerstand (z.B. Manganin) hergestellt werden.

Die oben beschriebene Vorrichtung zur magnetischen Messung der mechanischen Spannung, die mit statischen Kompensatoren versehen ist und die mit Stromkreisen, die die Unabhängigkeit vom Luftspalt und den minimalen Gehalt an Oberwellen sichern, ergänzt wurde und die bei mehreren Frequenzen arbeitet, kann bei der Herstellung von ferromagnetischen Bändern als Fühler für die Regelung des technologischen Prozesses bzw. als Kontrollgerät in weitem Bereich angewendet werden.

Ehe man mit dem magnetischen Spannungsmesser Betriebsmessungen, bzw. Qualitätsprüfungen durchführt, muss er auf das zu untersuchende ferromagnetische Blech geeicht werden. Es ist zweckmässig, die Eichung entweder mit einer Zerreissmaschine oder mit einer speziellen Vorrichtung durchzuführen, die zu diesem Zweck gebaut wurde und eine konstante Zugbelastung ermöglicht. Bei der Eichung muss dafür gesorgt werden, dass die relative Position von Messkopf und Band genauso bleibt, wie bei den Messköpfen, die auf das Walzgerüst montiert sind.

Auch das unbelastete Band ist im allgemeinen anisotrop, und diese Anisotropie lässt sich mit Hilfe der statischen Kompensatoren aufheben. Da durch die Wirkung der Kompensatoren das elektrische Ausgangssignal in unbelastetem Zustand null wird, kann man den Proportionalitätsfaktor zwischen der mechanischen Spannung und dem Ausgangssignal der Spannungsmesseinrichtung durch Anbringen einer bekannten Zugbelastung bestimmen.

Die Eichung auf die äussere mechanische Spannung muss nicht bei jeder Bandstärke durchgeführt werden, wenn man die Betriebsfrequenz des Messkopfes hoch genug wählt und dadurch die magnetische Skintiefe geringer wird, als die Dicke des feinsten zu untersuchenden Bleches.

Die Eichung kann an Blechproben, die nach jedem wesentlichen technologischen Prozess entnommen wurden, durchgeführt werden. Die einzelnen technologischen Prozesse sind in einem gewissen Sinne auch dadurch gekennzeichnet, welche Art von magnetischer Anisotropie das hergestellte Band aufweist. Da die Anisotropie des Bandes durch die geeignet gewählten Stromstärken der statischen Kompensatoren des magnetischen Messkopfes eindeutig charakterisiert ist, gelangt man durch die Tabellisierung dieser Werte zu einer einfachen Kontrollmöglichkeit. Die im Betriebslaboratorium aufgestellte Anisotropie-Tabelle kann man als Prüfvorschrift bei der Materialkontrolle benutzen. Stellt man die tabellierten Gleichstromwerte, die zu dem eben beendeten technologischen Prozess gehören, an dem Messkopf ein, der auf der Walzstrasse montiert ist, so ist der technologische Prozess fehlerfrei, wenn das Ausgangssignal des Messkopfes null ist. Natürlich darf bei dieser Kontrolle keine äussere mechanische Spannung das Band belasten.

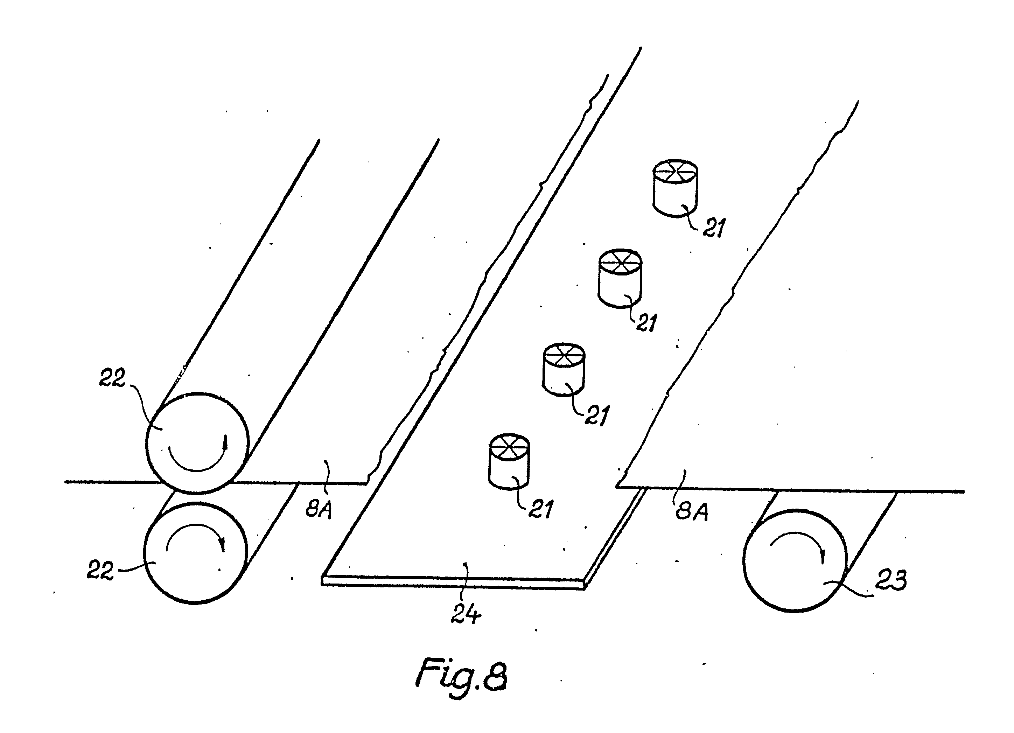

Aus Fig. 8 ist die Anordnung der auf dem Walzgerüst angebrachten magnetischen Messköpfe 21 ersichtlich, die auch mit statischen Kompensatoren versehen sind und der Kontrolle bzw. Regelung des Walzprozesses dienen. Die magnetischen Messköpfe 21, die auf dem Gestell 24 angebracht sind, befinden sich unter der Ebene des ferromagnetischen Bandes 8A, das aus den Arbeitswalzrollen 22 herausläuft und von der Rolle 23 gestützt wird.

Mit diesen Messköpfen 21 kann man – bei Einstellung der tabellierten Gleichstromwerte, die dem technologischen Prozess entsprechen – entscheiden, ob die Herstellung bisher fehlerfrei verlief. Ist die Ausgangsspannung der Messköpfe 21 null, bzw. bleibt sie innerhalb einer gegebenen (vom Fabrikat und den Ansprüchen abhängigen) Toleranzgrenze, so kann mit dem Weiterwalzen des Bandes 8A begonnen werden. Werden die Messköpfe 21 während des Walzens paarweise in Differentialschaltung benutzt, so bedeuten die Differenzspannung null, bzw. das Quotientsignal 1, dass das Band 8A über die Querrichtung homogen deformiert ist und nachträglich keine Planheitsfehler zu erwarten sind. Zeigt eines der Messkopfpaare eine Abweichung an, so kann der Fehler durch Änderung des Walzdruckes, durch Walzbiegung usw. ausgeglichen werden. Die Bänder, die mit einer derartigen Kontrolle gewalzt wurden, werden eine gleichmässige Dicke haben und nicht zur nachträglichen Planheitsfehlerbildung neigen.

Der Dressierprozess kann auf die oben beschriebene Weise mit einem entsprechenden Frequenzprogramm schon auf der Walzstrasse direkt kontrolliert werden und so kann die Qualität der Bänder wesentlich verbessert werden.

### Patentansprüche

1. Vorrichtung zur kontaktlosen Messung des elastischen Spannungszustandes in ferromagnetischen Körpern mit
- einem Magnetfeld-Erreger (6, 26) zur Erzeugung eines magnetischen Wechselfeldes in dem Körper (8) entlang einer ersten Richtung,
- einem Magnetfeld-Detektor (7, 27) zur Erfassung und Messung eines Magnetflusses in dem Körper, der in einer zur ersten Richtung fast senkrechten zweiten Richtung auftritt, sowie
- einer Kompensationseinrichtung (28, 28A) zur Erzeugung einer Magnetfeldkonfiguration in dem Körper, die Beiträge spannungsunabhängiger magnetischer Anisotropien des Körpers zum Messergebnis kompensiert,
dadurch gekennzeichnet, dass die Kompensationseinrichtung folgende Bestandteile umfasst:
    a) eine Gleichstromquellenanordnung (18)
    b) zwei aus der Gleichstromquellenanordnung gespeiste Elektromagneten (28 bzw. 28A), die so ausgebildet und angeordnet sind, dass die beiden von ihnen im Körper (8) erzeugten statischen Magnetfelder im wesentlichen senkrecht aufeinander stehen und eine minimale Kopplung mit dem Magnetfeld-Erreger (6, 26) und dem Magnetfeld-Detektor (7, 27) zur Folge haben.

2. Vorrichtung nach Anspruch 1, dadurch gekennzeichnet, dass die Elektromagneten (28 und 28A) so ausgebildet und ausgerichtet sind, dass ihre beiden statischen Magnetflussschleifen entlang den Winkelhalbierenden der Richtungen der Magnetflussschleifen des Erregers (26) und des Detektors (27) verlaufen.

3. Vorrichtung nach Anspruch 1 oder 2, dadurch gekennzeichnet, dass die beiden Elektromagneten (28 und 28A) U-förmige Kerne (13 und 13A) mit hohem elektrischem spezifischem Widerstand – vorteilhaft aus Permalloy – und um die Kerne gewickelte Spulen (14, 15 bzw. 16, 17) aufweisen.

4. Vorrichtung nach einem der Ansprüche 1 bis 3, dadurch gekennzeichnet, dass die beiden Elektromagneten (28 und 28A) aus voneinander unabhängig variierbaren Gleichstromquellen (18) gespeist sind.

5. Vorrichtung nach einem der Ansprüche 1 bis 4, dadurch gekennzeichnet, dass der Erreger (26) von einem Generator (6) der Frequenz 0,1–10 kHz gespeist ist.

6. Vorrichtung nach einem der Ansprüche 1 bis 5, dadurch gekennzeichnet, dass der Erreger (26) einen U-förmigen Kern (2) mit grosser Anfangspermeabilität und hohem spezifischem elektrischem Widerstand – vorteilhaft aus Mn–Zn–Ferrit – und eine um den Kern gewickelte Spule (3) aufweist, die aus einem Draht mit hohem spezifischem elektrischem Widerstand – vorteilhaft aus Manganin – oder aus einer Litze hergestellt ist.

7. Vorrichtung nach einem der Ansprüche 1 bis 6, dadurch gekennzeichnet, dass der Detektor ebenfalls eine Spule (5) sowie einen diese tragenden U-förmigen Kern (4) aufweist, der fast senkrecht zu dem U-förmigen Kern (2) des Erregers (26) ausgerichtet ist und aus einem Material mit hoher Anfangspermeabilität und hohem elektrischem spezifischem Widerstand – vorteilhaft aus Mn–Zn–Ferrit – hergestellt ist.

8. Vorrichtung nach Anspruch 5, dadurch gekennzeichnet, dass der Erreger (26) von dem Generator (6) durch einen Rückkopplungskreis (19, 20) gespeist ist, der einen rein sinusförmigen zeitlichen Verlauf der Induktion mit konstanter Amplitude sichert.

9. Vorrichtung nach Anspruch 8, dadurch gekennzeichnet, dass die Gleichstromquellenanordnung (18) in Abhängigkeit von einer Änderung des Luftspaltes zwischen den Kernen (13 und 13A) und dem Körper (8) so regelbar ist, dass bei gleichbleibendem Verhältnis der in die beiden Spulen (14, 15 und 16, 17) der Elektromagnete (28 und 28A) gespeisten Stromstärken das Verhältnis der Erregerstromstärke zu der in eine der Spulen der Elektromagnete gespeisten Stromstärke trotz der Änderung des Luftspaltes konstant bleibt.

10. Vorrichtung nach Anspruch 3, dadurch gekennzeichnet, dass die Spulen (15, 16 und 17, 18) an den Kernen (13 und 13A) der Elektromagnete (28, 28A) mit Kondensatoren parallel geschaltet sind.

### Claims

1. Apparatus for the contactless measuring of elastic stress in a ferromagnetic material, with
- an exciter of magnetic field (6, 26) for producing an alternating magnetic field in the material (8) along a first direction,

— a magnetic field detector (7, 27) for sensing and measuring in the material a magnetic flux appearing in a second direction which is nearly perpendicular to the first direction, as well as

— a compensation device (28, 28A) for creating a configuration of the magnetic field in the material which compensates for contributions to the measurement result due to voltage-independent magnetic anisotropies in the material, characterised in that the compensation device consists of the following components:

a) a direct current supply arrangement (18),

b) two electromagnets (28, 28A, respectively) which are fed by the direct current supply arrangement (18) and which are constructed and arranged in such a way that the two static magnetic fields created by them in the material (8) are essentially perpendicular to one another and entail only a minimal coupling with the exciter (6, 26) of magnetic field and the magnetic field detector (7, 27).

2. Apparatus according to claim 1, characterised in that the electromagnets (28 and 28A) are constructed and aligned such that their two static magnetic flux loops extend along the bisection line of the angle between the directions of the loops of the static magnetic fluxes of the exciter (26) and the detector (27).

3. Apparatus according to claim 1 or 2, characterised in that both electromagnets (28 and 28A) have U-shaped cores (13 and 13A) of high specific electric resistivity – advantageously made of Permalloy – and coils (14, 15 and 16, 17) wound around the cores (13 and 13A).

4. Apparatus according to one of claims 1 to 3, characterised in that the two electromagnets (28 and 28A) are supplied from direct current sources (18) which are mutually independently variable.

5. Apparatus according to one of claims 1 to 4, characterised in that the exciter (26) is fed by a generator (6) generating a frequency of 0.1–10 kHz.

6. Apparatus according to one of claims 1 to 5, characterised in that the exciter (26) consists of a U-shaped core (2) of high initial permeability and high specific electric resistivity – advantageously of a Mn–Zn ferrite – and a coil (3) wound around the core which is made of a wire of high specific electric resitivity – advantageously of manganin – or of a stranded wire.

7. Apparatus according to one of claims 1 to 6, characterised in that the detector (27) also has a coil (5) as well as a U-shaped core (4) carrying it, which core is directed nearly perpendicularly to the U-shaped core (2) of the exciter (26) and is made of a material of high initial magnetic permeability and high specific electric resistivity – advantageously of Mn–Zn ferrite.

8. Apparatus according to claim 5, characterised in that the exciter (26) is fed by the generator (6) via a feedback circuit (19, 20) which assures a pure sinusoidal time variation of the induction at constant amplitude.

9. Apparatus according to claim 8, characterised in that the direct current supply arrangement (18) is so controllable in dependence of a variation in the air gap between the cores (13 and 13A) and the material (8) that with the ratio of the current intensities fed into the two coils (14, 15 and 16, 17) of the electromagnets (28 and 28A) remaining constant, the ration of current intensity of the exciting current to that of the current fed into one of the coils remains constant, despite variations in the air gap.

10. Apparatus according to claim 3, characterised in that the coils (15, 16 and 17, 18) are connected at the cores (13 and 13A) of the electromagnets (28, 28A) in parallel with capacitors.

**Revendications**

1. Dispositif pour la mesure sans contact des containtes élastiques dans des corps ferromagnétiques, comportant:

— un organe d'exitation de champ magnétique (6, 26) pour produire un champ alternatif magnétique dans le corps (8) dans une première direction,

— un détecteur de champ magnétique (7, 27) pour capter et mesurer un flux magnétique dans le corps, qui se produit dans une seconde direction presque perpendiculaire à la première direction, et

— un dispositif de compensation (28, 28A) pour produire une configuration de champ magnétique dans le corps, qui compense les influences des anisotropies magnétiques, du corps sur le résultat de mesure, indépendamment des containtes,

caractérisé en ce que le dispositif de compensation comprend les composants suivants:

a) un ensemble de sources de courant continu (18),

b) deux électro-aimants (28, 28A) alimentés par l'ensemble de sources de courant continu et qui sont agencés et disposés de manière que les deux champs magnétiques statiques produits par eux dans le corps (8) soient orientés sensiblement perpendiculaires entre eux et qu'il en résulte un couplage minimal avec l'organe d'excitation de champ magnétique (6, 26) et le détecteur de champ magnétique (7, 27).

2. Dispositif selon la revendication 1, caractérisé en ce que les électro-aimants (28 et 28A) sont agencés et dirigés de manière que leurs deux boucles de flux magnétiques statiques soient orientées le long des bissectrices des directions des boucles de flux magnétiques de l'organe d'excitation (26) et du détecteur (27).

3. Dispositif selon l'une des revendications 1 ou 2, caractérisé en ce que les deux électro-aimants (28 et 28A) comportent des noyaux (13 et 13A) en forme de U, possédant une résistance électrique spécifique élevée – formés avantageusement de Permalloy – et des bobines (14, 15 resp. 16, 17) enroulées autour des noyaux.

4. Dispositif selon l'une des revendications 1 à 3, caractérisé en ce que les deux électro-aimants (28 et 28A) sont alimentés par des sources de courant continu (18) pouvant être réglées indépendamment l'une de l'autre.

5. Dispositif selon l'une des revendications 1 à 4, caractérisé en ce que l'organe d'excitation (26) est alimenté par un générateur (6) à une fréquence comprise entre 0,1 et 10 kHz.

6. Dispositif selon l'une des revendications 1 à 5, caractérisé en ce que l'organe d'excitation (26) comporte un noyau (2) en forme de U, de grande perméabilité initiale et de résistance électrique spécifique élevée – formé avantageusement de ferrite au Mn–Zn – ainsi qu'une bobine (3) enroulée autour du noyau et qui est constituée d'un fil à haute résistance électrique spécifique – avantageusement en manganine – ou bien d'un cable torsadé.

7. Dispositif selon l'une des revendications 1 à 6, caractérisé en ce que le détecteur comporte également une bobine (5) ainsi qu'un noyau (4) en forme de U, portant celle-ci, qui est orienté de façon presque perpendiculaire au noyau en forme de U (2) de l'organe d'excitation (26) et qui est fabriqué à partir d'un matériau à haute perméabilité initiale et à résistance électrique spécifique élevée – avantageusement à partir de ferrite, au Mn–Zn.

8. Dispositif selon la revendication 5, caractérisé en ce que l'organe d'excitation (26) est alimenté par le générateur (5) au moyen d'un circuit de couplage réactif (19, 20), qui garantit une variation temporelle purement sinusoïdale de l'induction avec une amplitude constante.

9. Dispositif selon la revendication 8, caractérisé en ce que l'ensemble de sources de courant continu (18) est réglable en fonction d'une variation de l'entrefer entre les noyaux (13 et 13A) et le corps (8), de manière que, dans le cas d'un rapport constant des intensités des courants fournis aux deux bobines (14, 15 et 16, 17) des électro-aimants (28 et 28A), le rapport des intensités du courant d'excitation et des intensités du courant alimentant une des bobines des électro-aimants reste constant malgré la variation de l'entrefer.

10. Dispositif selon la revendication 3, caractérisé en ce que les bobines (15, 16 et 17, 18) placées sur les noyaux (13 et 13A) des électro-aimants (28, 28A) sont branchées en parallèle avec des condensateurs.

Fig.1

Fig.2

Fig. 3

INNERE SPANNUNG

ZUG

0

DRUCK

TRANSVERSALE KOORDINATE

Fig. 4

13

Fig. 5a

Fig. 5b

Fig. 6

0 018 428

Fig. 7

0 018 428

*Fig.8*